# FASCICULE DE BREVET EUROPEEN

(11) **EP 2 609 307 B1**
(45) Date de publication et mention de la délivrance du brevet: **27.01.2016**
(21) Numéro de dépôt: 11755389.1
(22) Date de dépôt: 01.08.2011
(51) Int. Cl.: F01P 11/04

(54) **DISPOSITIF POUR SUPPORTER LA CANALISATION DE SORTIE DU RADIATEUR DANS UN VEHICULE AUTOMOBILE**
VORRICHTUNG ZUR STÜTZE DES ABLAUFROHRS EINES KÜHLERS BEI EINEM KRAFTFAHRZEUG
DEVICE FOR SUPPORTING THE OUTLET PIPE OF THE RADIATOR IN A MOTOR VEHICLE

(30) Priorité: 24.08.2010 FR 1056738
(43) Date de publication de la demande: 03.07.2013
(73) Titulaire: PSA Peugeot Citroën Automobiles S.A., 78140 Velizy Villacoublay (FR)
(72) Inventeur: MALHEIRO DA SILVA, Nuno, F-92250 La Garenne Colombes (FR); KHARMA, Eric, F-95610 Eragny sur Oise (FR)
(74) Mandataire: Rosenberg, Muriel Sylvie
(86) Numéro de dépôt international: PCT/FR2011/051851
(87) Numéro de publication internationale: WO 2012/025678

(56) Documents cités:
- JP-A- 9 095 148
- JP-A- 2005 002 797
- JP-U- H0 260 787

## Description

La présente invention concerne un dispositif pour supporter la canalisation de sortie du radiateur dans un véhicule automobile.

A l'heure actuelle, la canalisation de sortie du radiateur est maintenue par des agrafes fixées en différents endroits de l'environnement moteur. Cette solution de support de la canalisation présente l'inconvénient, du fait de la présence des agrafes, d'être relativement encombrante. Elle présente aussi l'inconvénient d'impliquer un temps de montage des agrafes, par conséquent d'être coûteuse.

On a déjà cherché des moyens techniques de maintien d'une pièce en association à un câble, qui permettent de surmonter les difficultés évoquées ci-dessus.

A titre d'exemple, le document EP 1 118 593 B1 décrit un dispositif pour faisceau de câble à insérer dans un arrête câble pourvu d'une paroi intérieure et fixé au cadre d'une bicyclette. Ce dispositif comprend :
- une potence de flexible comportant une partie formant corps et une partie pour câbles qui s'étend depuis la partie formant corps, cette dernière ayant un premier alésage axial s'étendant entre des extrémités opposées et une première largeur extérieure,
- une butée de potence ayant un deuxième alésage axial s'étendant entre des extrémités opposées et une deuxième largeur extérieure avec une pièce d'arrêt qui s'étend depuis la butée de potence et à travers celle-ci,
- une douille d'arrêt ayant un troisième alésage axial s'étendant entre des extrémités opposées et une troisième largeur extérieure qui est normalement très semblable à la deuxième largeur extérieure, ladite douille d'arrêt étant en matière radialement expansible et située entre la potence de flexible et la butée de potence, et
- un boulon de fixation de potence s'étendant à travers le premier alésage axial de la potence de flexible, le troisième alésage axial de la douille d'arrêt et le deuxième alésage axial de la butée de potence afin de réunir les unes aux autres la potence de flexible, la douille d'arrêt et la butée de potence avant le montage du faisceau de câbles sur un cadre de bicyclette.

Dans ce dispositif, la troisième largeur extérieure de la douille d'arrêt augmente lorsque le boulon de fixation est fixé dans le deuxième alésage axial de la butée de potence en forçant la potence de flexible et la butée de potence à presser contre la douille d'arrêt, le dispositif pour câbles étant immobilisé en place par le déploiement radial de la douille d'arrêt lorsque le boulon de fixation est fixé.

Le but de la présente invention est de fournir un dispositif pour supporter la canalisation de sortie du radiateur dans un véhicule automobile, qui prenne moins de volume que les agrafes de maintien connues de l'art antérieur.

Un autre but de la présente invention est de fournir un tel dispositif, qui soit de conception et de réalisation simple, qui soit efficace et fiable, et qui soit économique, notamment en supprimant le temps de montage des moyens conventionnels, de type agrafes de fixation.

Pour parvenir à ces buts, la présente invention a pour objet un dispositif pour supporter la canalisation de sortie du radiateur dans un véhicule automobile, et ce dispositif est intégré à l'arrêt de gaine de commande de débrayage à câble du véhicule, de manière à supprimer l'agrafe de maintien de ladite canalisation.

Selon un mode préféré de réalisation de l'invention, le dispositif est constitué par un ajout de matière audit arrêt de gaine de commande de débrayage à câble.

En variante, le dispositif peut être constitué par une pièce rapportée fixée sur ledit arrêt de gaine de commande de débrayage.

Le dispositif est placé sensiblement en partie supérieure de l'arrêt de gaine de commande de débrayage à câble.

De préférence, le dispositif peut être constitué par un étrier sensiblement plat destiné à recevoir par concordance des formes la canalisation de sortie de radiateur, ledit étrier s'étendant dans un plan sensiblement transversal à l'axe de la canalisation.

De manière avantageuse, le dispositif peut supporter la canalisation de sortie de radiateur par simple « clippage » de cette dernière sur le dispositif.

L'étrier présente un profil de réception de la canalisation qui est en arc de cercle, légèrement supérieur à un demi-cercle pour permettre ledit « clippage ».

De manière avantageuse également, le dispositif, monobloc avec l'arrêt de gaine, peut être obtenu par la même opération de moulage que ce dernier.

L'arrêt de gaine de commande de débrayage est fixé sur le carter du véhicule, de préférence en deux points de fixation.

La présente invention a également pour objet un véhicule automobile, qui comporte un dispositif pour supporter la canalisation de sortie du radiateur, et ce dispositif est conforme à celui décrit ci-dessus dans ses grandes lignes.

D'autres buts, avantages et caractéristiques de l'invention apparaîtront dans la description qui suit d'un exemple de réalisation de l'invention, non limitatif de l'objet et de la portée de la présente demande de brevet, accompagnée de dessins dans lesquels :
- la figure 1 représente, de manière schématique, le dispositif pour supporter la canalisation de sortie du radiateur dans un véhicule automobile, selon la présente invention, et
- la figure 2 représente le dispositif de la figure 1 avec la canalisation de sortie de radiateur du véhicule.

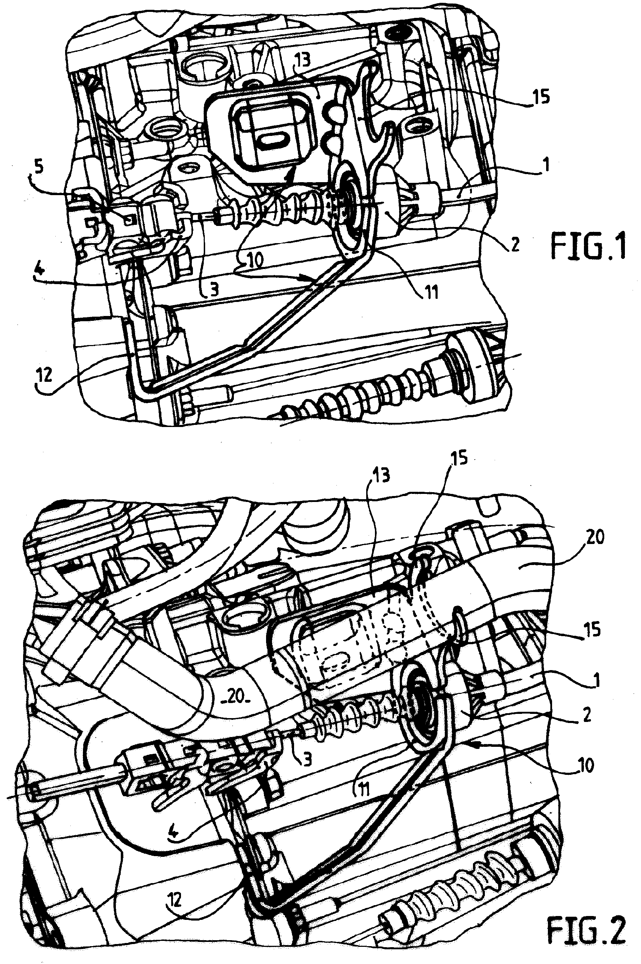

En référence au dessin de la figure 1, on a représenté la gaine 1 d'un câble de commande de débrayage en provenance du mécanisme (non représenté) de pédale de débrayage du véhicule. L'embout 2 de la gaine 1 est fixé sur un arrêt de gaine, de référence générale 10, lui-même fixé au carter du véhicule par deux pattes de fixation 12 et 13, par exemple des pattes de fixation à vis.

La référence 11 désigne la partie centrale et fonctionnelle de l'arrêt de gaine comprenant l'arrêtoir proprement dit qui vient s'insérer dans une gorge de l'embout de gaine 2 pour immobiliser ce dernier en translation.

Le câble de commande de débrayage, de référence 3, est relié par son extrémité à la fourchette d'embrayage 4 permettant l'actionnement de la butée de débrayage. La référence 5 désigne le système de réglage de la longueur du câble de débrayage.

Selon le principe de la présente invention, l'arrêt de gaine 10 comporte, dans sa partie supérieure, un ajout de matière, de référence générale 15, qui a pour fonction de supporter la canalisation 20 de sortie de radiateur représentée sur le dessin de la figure 2.

Cet ajout de matière 15 permet de supprimer le moyen classique de support de la canalisation 20, à savoir une ou plusieurs agrafes.

Cet ajout de matière 15 est constitué par un étrier sensiblement plat destiné à recevoir par concordance des formes la canalisation 20 de sortie de radiateur. A cette fin, il présente un profil sensiblement en arc de cercle, de préférence légèrement supérieur à un demi-cercle, destiné à recevoir une section cylindrique de la canalisation et la maintenir en position. L'étrier 15 s'étend sensiblement dans un plan sensiblement transversal à l'axe de la canalisation 20, cette dernière étant simplement « clippée » sur l'étrier 15.

De préférence, l'ajout de matière formant étrier 15 est « monobloc » avec l'arrêt de gaine 10 et obtenu par la même opération de moulage que ce dernier.

Selon une variante de réalisation de l'invention, l'ajout de matière formant étrier support de la canalisation 20 peut être réalisé sous la forme d'une pièce indépendante, rapportée et fixée sur l'arrêt de gaine 10 de commande de débrayage à câble.

L'invention décrite ci-dessus présente de nombreux avantages, parmi lesquels les avantages suivants :
- elle permet, dans un environnement moteur très contraignant, de gagner du volume en supprimant le moyen classique de maintien de la canalisation de sortie du radiateur constitué par au moins une agrafe,
- elle permet de réduire le temps de montage associé au support de la canalisation de sortie du radiateur.

Bien entendu, la présente invention n'est pas limitée aux modes de réalisation décrits et représentés ci-dessus à titre d'exemples ; d'autres modes de réalisation peuvent être conçus par l'homme de métier sans sortir du cadre et de la portée de la présente invention.

## Revendications

1. Dispositif pour supporter la canalisation (20) de sortie du radiateur dans un véhicule automobile, **caractérisé en ce qu'**il est intégré à l'arrêt de gaine (10) de commande de débrayage à câble du véhicule, de manière à supprimer l'agrafe de maintien de ladite canalisation.

2. Dispositif selon la revendication 1, **caractérisé en ce qu'**il est constitué par un ajout de matière (15) de l'arrêt de gaine (10) de commande de débrayage à câble du véhicule.

3. Dispositif selon la revendication 1, **caractérisé en ce qu'**il est constitué par une pièce rapportée fixée sur l'arrêt de gaine (10) de commande de débrayage à câble du véhicule.

4. Dispositif selon l'une quelconque des revendications 2 et 3, **caractérisé en ce que** ledit dispositif est placé sensiblement en partie supérieure de l'arrêt de gaine (10) de commande de débrayage à câble.

5. Dispositif selon l'une quelconque des revendications 1 à 3, **caractérisé en ce qu'**il est constitué par un étrier (15) sensiblement plat destiné à recevoir par concordance des formes la canalisation (20) de sortie de radiateur du véhicule, ledit étrier (15) s'étendant dans un plan sensiblement transversal à l'axe longitudinal de la canalisation (20) en place dans le dispositif.

6. Dispositif selon la revendication 5, **caractérisé en ce qu'**il supporte ladite canalisation (20) de sortie de radiateur par « clippage » de cette dernière sur le dispositif.

7. Dispositif selon la revendication 6, **caractérisé en ce que** l'étrier présente un profil de réception de la canalisation qui est en arc de cercle, légèrement supérieur à un demi-cercle pour permettre ledit « clippage ».

8. Dispositif selon la revendication 2, **caractérisé en ce qu'**il est monobloc avec ledit arrêt de gaine (10) et obtenu par la même opération de moulage que ce dernier.

9. Dispositif selon l'une quelconque des revendications 1 à 8, **caractérisé en ce que** ledit arrêt de gaine (10) de commande de débrayage est fixé sur le carter (30) du véhicule.

10. Véhicule automobile, **caractérisé en ce qu'**il comporte un dispositif pour supporter la canalisation (20) de sortie du radiateur, lequel dispositif étant conforme à l'une quelconque des revendications précédentes.

## Patentansprüche

1. Vorrichtung zur Unterstützung des Ablaufrohrs (20) des Kühlers in einem Kraftfahrzeug, **dadurch gekennzeichnet, dass** sie am Kabelzuganschlag (10) einer Auskuppelsteuerung des Fahrzeugs integriert ist, um die Klammer zum Halten des Rohrs zu vermeiden.

2. Vorrichtung nach Anspruch 1, **dadurch gekennzeichnet, dass** sie durch eine Materialzugabe (15) des Kabelzuganschlags (10) einer Auskuppelsteuerung des Fahrzeugs gebildet ist.

3. Vorrichtung nach Anspruch 1, **dadurch gekennzeichnet, dass** sie von einem aufgesetzten Stück gebildet ist, das auf dem Kabelzuganschlag (10) einer Auskuppelsteuerung des Fahrzeugs befestigt ist.

4. Vorrichtung nach einem der Ansprüche 2 und 3, **dadurch gekennzeichnet, dass** die Vorrichtung im Wesentlichen im oberen Teil des Kabelzuganschlags (10) einer Auskuppelsteuerung angeordnet ist.

5. Vorrichtung nach einem der Ansprüche 1 bis 3, **dadurch gekennzeichnet, dass** sie von einem im Wesentlichen flachen Bügel (15) gebildet ist, der dazu bestimmt ist, durch Formübereinstimmung das Auflaufrohr (20) eines Kühlers des Fahrzeugs aufzunehmen, wobei sich der Bügel (15) in einer Ebene im Wesentlichen quer zur Längsachse des Rohrs (20) in der Vorrichtung angeordnet erstreckt.

6. Vorrichtung nach Anspruch 5, **dadurch gekennzeichnet, dass** sie das Auflaufrohr (20) eines Kühlers durch "Clipsen" dieses letztgenannten auf die Vorrichtung unterstützt.

7. Vorrichtung nach Anspruch 6, **dadurch gekennzeichnet, dass** der Bügel ein kreisbogenförmiges Profil zur Aufnahme des Rohrs aufweist, das etwas größer als ein Halbkreis ist, um das "Clipsen" zu ermöglichen.

8. Vorrichtung nach Anspruch 2, **dadurch gekennzeichnet, dass** sie mit dem Zuganaschlag (10) einstückig ist und durch denselben Formungsvorgang wie dieser letztgenannte hergestellt wird.

9. Vorrichtung nach einem der Ansprüche 1 bis 8, **dadurch gekennzeichnet, dass** der Zuganaschlag (10) einer Auskuppelsteuerung auf dem Gehäuse (30) des Fahrzeugs befestigt ist.

10. Kraftfahrzeug, **dadurch gekennzeichnet, dass** es eine Vorrichtung zur Unterstützung des Ablaufrohrs (20) eines Kühlers umfasst, wobei die Vorrichtung einem der vorhergehenden Ansprüche entspricht.

## Claims

1. A device for supporting the outlet pipe (20) of the radiator in a motor vehicle, **characterized in that** it is built into the sheath stop (20) of the cable release control of the vehicle, so as to eliminate the need for a clip for supporting said pipe.

2. The device according to Claim 1, **characterized in that** it is constituted by an addition of material (15) of the sheath stop (10) of the cable release control of the vehicle.

3. The device according to Claim 1, **characterized in that** it is constituted by an added piece fixed on the sheath stop (10) of the cable release control of the vehicle.

4. The device according to any one of Claims 2 and 3, **characterized in that** said device is placed substantially in the upper part of the sheath stop (10) of the cable release control.

5. The device according to any one of Claims 1 to 3, **characterized in that** it is constituted by a substantially flat yoke (15) intended to receive, by a fit of their shapes, the outlet pipe (20) of the radiator of the vehicle, said yoke (15) extending in a plane substantially transverse to the longitudinal axis of the pipe (20) in place in the device.

6. The device according to Claim 5, **characterized in that** it supports said outlet pipe (20) of the radiator by "clipping" the latter on the device.

7. The device according to Claim 6, **characterized in that** the yoke has a profile for receiving the pipe which is an arc of a circle, slightly greater than a semicircle, to permit said "clipping".

8. The device according to Claim 2, **characterized in that** it is in a single piece with said sheath stop (10) and obtained by the same casting operation as the latter.

9. The device according to any one of Claims 1 to 8, **characterized in that** said sheath stop (10) of the release control is fixed on the casing (30) of the vehicle.

10. A motor vehicle, **characterized in that** it comprises a device for supporting the outlet pipe (20) of the radiator, said device being in accordance with any one of the preceding claims.
